# EUROPÄISCHE PATENTSCHRIFT

(11) **EP 3 580 263 B1**
(45) Veröffentlichungstag und Bekanntmachung des Hinweises auf die Patenterteilung: **09.09.2020**
(21) Anmeldenummer: 17791397.7
(22) Anmeldetag: 30.10.2017
(51) Int. Cl.: C08G 77/10, C08G 77/14

(54) **VERFAHREN ZUR HERSTELLUNG SPHÄRISCHER POLYSILSESQUIOXANPARTIKEL**
METHOD FOR PRODUCING SPHERICAL POLYSILSESQUIOXANE PARTICLES
PROCÉDÉ POUR LA FABRICATION DE PARTICULES SPHÉRIQUES DE POLYSILSESQUIOXANE

(43) Veröffentlichungstag der Anmeldung: 18.12.2019
(73) Patentinhaber: Wacker Chemie AG, 81737 München (DE)
(72) Erfinder: KNÖR, Sebastian, 84547 Emmerting (DE); SEILINGER, Kathrin, 84489 Burghausen (DE)
(74) Vertreter: Fritz, Helmut
(86) Internationale Anmeldenummer: PCT/EP2017/077732
(87) Internationale Veröffentlichungsnummer: WO 2019/086094

(56) Entgegenhaltungen:
- 20161108, Bd. 1998, Nr. 17, 8. November 2016 (2016-11-08), XP002763903, & JP H10 45914 A (TOSHIBA SILICONE) 17. Februar 1998 (1998-02-17)
- 20161108, Bd. 2004, Nr. 22, 8. November 2016 (2016-11-08), XP002763904, & JP 2003 335860 A (GE TOSHIBA SILICONES CO LTD) 28. November 2003 (2003-11-28)
- 20161108, Bd. 2000, Nr. 55, 8. November 2016 (2016-11-08), XP002763905, & JP 2000 186148 A (GE TOSHIBA SILICONES CO LTD) 4. Juli 2000 (2000-07-04)

## Beschreibung

Die Erfindung betrifft ein Verfahren zur Herstellung sphärischer Polysilsesquioxanpartikel durch Hydrolyse von Trialkoxysilan und Kondensation des Hydrolysats mit Base.

Der Stand der Technik, insbesondere JP3970449B2, JPH0488023 JPH1045914, JP2003-335860, JP2000-186148 und JPH06248081A kennt verschiedene Verfahren zur Erzeugung von sphärischen Polymethylsilsesquioxanpartikeln und beschäftigt sich mit der Optimierung der Raum-Zeit-Ausbeute oder der Kontrolle der Partikelgröße. Bisher ist kein Verfahren beschrieben, welches eine Kontrolle des Agglomerisationsverhaltens der Partikel erlaubt.
Pulverförmige Produkte werden umständlich durch Trocknung und anschließende Mahlung erhalten. "Crushing" oder Mahlung mittels Strahlmühle ist notwendig zur Deagglomeration der bei der herkömmlichen Trocknung versinternden Partikel.

Gegenstand der Erfindung ist ein Verfahren zur Herstellung sphärischer Polysilsesquioxanpartikel, bei dem in einem ersten Schritt Trialkoxysilan der allgemeinen Formel (I)

RSi(OR¹)₃ (I),

in der
R einen Kohlenwasserstoffrest mit 1 bis 16 Kohlenstoffatomen dessen Kohlenstoffkette durch nicht benachbarte Gruppen -O-unterbrochen sein kann,
**R¹** einen C₁- bis C₄-Alkylrest bedeuten,
mit angesäuertem Wasser mit einem pH-Wert von höchstens 6 unter Durchmischung zu einem Hydrolysat umgesetzt wird,
in einem zweiten Schritt das Hydrolysat mit Lösung einer Base in Wasser oder C₁- bis C₄-Alkanol vermischt wird,
in einem dritten Schritt die Mischung 30 Minuten bis 6 Stunden aufbewahrt wird,
in einem vierten Schritt die Mischung mit weiterer Lösung einer Base in Wasser oder C₁- bis C₄-Alkanol vermischt wird,
in einem fünften Schritt die Mischung mindestens 5 Minuten aufbewahrt oder bewegt wird
und in einem sechsten Schritt die Polysilsesquioxanpartikel isoliert werden.

Es wurde gefunden, dass das Versintern der Polysilsesquioxanpartikel beim Trocknen vermieden werden kann, wenn mindestens 5 min vor der Isolierung der Partikel eine zusätzliche Portion Base zur Mutterlauge gegeben wird. Dadurch können feine Pulver ohne zusätzliche Mahlung erhalten werden.

Die Erfindung stellt ein verbessertes Verfahren zur Erzeugung agglomerationsfreier, sphärischer Polymethylsilsesquioxanpartikel bereit. Das erfindungsgemäße Verfahren erlaubt die Herstellung sphärischer Polymethylsilsesquioxanpartikel in sehr kurzer Prozesszeit und vermeidet dabei ein Versintern der Partikel. Eine aufwändige Mahlung der Partikel, wie im Stand der Technik beschrieben, kann dadurch vermieden werden.

Für die Anwendung in kosmetischen Produkten und in industriellen Anwendungen, z.B. als Antiblockmittel, ist es wichtig und qualitätsrelevant, dass die Polymethylsilsesquioxanpartikel feinkörnig sind und keine feste Wechselwirkung zueinander ausbilden, damit sie einfach verteilt werden können. Größere Körner, durch feste Agglomerate oder versinterte Partikel, fühlen sich bei Kosmetikprodukten sensorisch schlecht an, sie können sogar kratzen, und in Topcoats führen sie zu Oberflächenfehlern.

Bei Fällzeiten kleiner 5 h ohne zusätzliche Basenzugabe im vierten Schritt erhält man ein körniges Produkt. Die Körner sind vergleichsweise hart, was auf einen festen Zusammenhalt der einzelnen Partikel hinweist. Feine Pulver können nur durch zusätzliche Mahlung erhalten werden. Die Härte der Körner und die Wechselwirkung der Partikel nimmt mit zunehmender Fällzeit ab. Erst bei Fällzeiten >5 h werden weiche Pulver erhalten. Lange Fällzeiten führen jedoch zu hohen Herstellkosten.

Die nach dem erfindungsgemäßen Verfahren hergestellten, getrockneten Partikel zeigen bereits nach einer Fällzeit von insgesamt 1,5 h (Schritte 2 bis 5) keine relevante Wechselwirkung miteinander. Es werden abhängig von der verwendeten Base teilweise direkt feine, pulvrige Produkte erhalten. Krümelige Produkte zerfallen bereits durch Schütteln, Rühren oder bei Siebung in feine Pulver. Die Härte der Krümel und die Wechselwirkung der Partikel nimmt mit zunehmender Fällzeit ab.

**R** bedeutet vorzugsweise einen Alkylrest mit 1 bis 6 Kohlenstoffatomen oder Phenylrest, insbesondere Ethylrest oder Methylrest.

**R¹** bedeutet vorzugsweise einen Methyl-, Ethyl-, oder n-Propylrest, insbesondere einen Methylrest.

Bevorzugte Trialkoxysilane der allgemeinen Formel (I) sind Methyltrimethoxysilan, Methyltriethoxysilan, Methyltri-n-propoxysilan, Methyltriisopropoxysilan und Methyltris(2-methoxyethoxy)silan und Gemische davon.

Die Umsetzung zu einem Hydrolysat erfolgt vorzugsweise in angesäuertem Wasser mit einem pH-Wert von höchstens 5,5 besonders bevorzugt höchstens 4,5 und vorzugsweise mindestens 1, besonders bevorzugt mindestens 2, insbesondere mindestens 2,3.

Das eingesetzte Wasser ist vorzugsweise entsalzt und weist vor dem Ansäuern vorzugsweise eine Leitfähigkeit von höchstens 50 µS/cm, bevorzugt höchstens 30 µS/cm, besonders bevorzugt höchstens 20 µS/cm auf, insbesondere bevorzugt höchstens 10 µS/cm auf, jeweils gemessen bei 20°C.

Zum Ansäuern des eingesetzten Wassers können Brønstedt-Säuren oder Lewis-Säuren eingesetzt werden.
Beispiele für Lewis-Säuren sind BF₃, AlCl₃, TiCl₃, SnCl₄, SO₃, PCl₅, POCl₃, FeCl₃ und dessen Hydrate und ZnCl₂. Beispiele für Brønstedt-Säuren sind Salzsäure, Bromwasserstoffsäure, Schwefelsäure, Salpetersäure, salpetrige Säure, Chlorsulfonsäure, Phosphorsäuren, wie ortho-, meta- und Polyphosphorsäuren, Borsäure, selenige Säure, Salpetersäure, Carbonsäuren, wie Ameisensäure, Essigsäure, Propionsäure, Citronensäure und Oxalsäure, Halogenessigsäuren, wie Trichlor- und Trifluoressigsäure, p-Toluolsulfonsäure, saure Ionenaustauscher, saure Zeolithe und säureaktivierte Bleicherde.

Bevorzugt sind Salzsäure, Bromwasserstoffsäure und Essigsäure.

Das Ansäuern des Wassers kann vor der Umsetzung zum Hydrolysat gleichzeitig mit der Umsetzung erfolgen oder sowohl vor der Umsetzung als auch gleichzeitig mit der Umsetzung erfolgen. Die Hydrolyse des Trialkoxysilans der allgemeinen Formel (I) ist eine schwach exotherme Reaktion. Die Temperatur im ersten Schritt wird in einer bevorzugten Ausführungsform gegebenenfalls durch Heizen oder Kühlen vorzugsweise bei 0°C bis 60°C, bevorzugt bei 10°C bis 50°C, besonders bevorzugt bei 15°C bis 40°C, ganz besonders bevorzugt bei 15 bis 30 °C, insbesondere bei 15 - 25 °C gehalten, wobei die Temperaturschwankung nach Erreichen der Zieltemperatur vorzugsweise weniger als 10 °C, bevorzugt weniger als 5 °C beträgt. Die Dosierung des Trialkoxysilans kann beliebig vor oder nach Erreichen der Zieltemperatur begonnen werden.

In einer anderen Ausführungsform wird das Trialkoxysilan in einer Portion zudosiert. Dabei wird die Wärme nicht aktiv oder nur teilweise herausgekühlt. In dieser Ausführungsform findet eine exotherme Zunahme der Temperatur nach Zugabe des Trialkoxysilans statt. Die Temperatur der Umsetzung im ersten Schritt beträgt 20 °C bis 80°C, vorzugsweise bis 60°C.

Vorzugsweise wird das Trialkoxysilan in 0,5 bis 5 h, besonders bevorzugt in höchstens 2 h dosiert. Zwischen der schnellen Zugabe und der Dosierung gibt es einen fließenden Übergang an erfindungsgemäßen Ausführungsformen, d.h. es kann z.B. zügig in 15 min unter teilweiser Wärmeabführung bis maximal 40°C zugegeben werden, oder es kann z.B. über 2 h dosiert werden, dabei aber nur geringfügig gekühlt werden, wodurch man zunächst einen Temperaturanstieg auf 30°C zulässt und bei dieser Temperatur hält.
Besonders bevorzugt ist die Dosierung bei einer konstanten Temperatur.

Vorzugsweise werden im ersten Schritt auf 100 Gewichtsteile Wasser 5 bis 43 Gewichtsteile, vorzugsweise 11 bis 34 Gewichtsteile, insbesondere 13 bis 25 Gewichtsteile Trialkoxysilan eingesetzt.

Vorzugsweise wird nach Dosierung des Trialkoxysilans 5 min bis 5 h, besonders bevorzugt 10 min bis 3 h insbesondere 15 min bis 1,5 h nachgerührt. Die Nachrührzeit wird vorzugsweise so gewählt, dass die Summe der Zugabezeit des Silans und der Nachrührzeit 6 h nicht überschreitet.

Die Temperatur beim Nachrühren beträgt bei 0°C bis 60°C, bevorzugt bei 10°C bis 50°C, besonders bevorzugt bei 10°C bis 40°C, ganz besonders bevorzugt bei 10 bis 30 °C, insbesondere bei 15 bis 25 °C gehalten. Vorzugsweise ist die Differenz der Temperatur der Umsetzung im ersten Schritt und der Temperatur beim Nachrühren kleiner 20 °C, bevorzugt kleiner 10 °C, insbesondere kleiner 5 °C.

Kinetikstudien mittels NMR haben gezeigt, dass die Geschwindigkeit der Hydrolyse der Trialkoxysilane der allgemeinen Formel (I) im sauren Milieu pH abhängig ist und umso schneller verläuft, je niedriger der pH-Wert ist. Die Geschwindigkeit der Kondensationsreaktion ist ebenfalls pH abhängig und nimmt bei niedrigem pH-Wert zu. Nach dem ersten Schritt kann in einer bevorzugten Ausführungsform der pH-Wert des Hydrolysats auf einen Wert von 1 bis 6 eingestellt werden bevor im zweiten Schritt das Hydrolysat mit einer definierten Menge an Base gefällt wird.
Der Ziel-pH-Wert im sauren Bereich, kann prinzipiell frei definiert werden. Vorzugsweise ist der Ziel-pH-Wert mindestens 2, insbesondere mindestens 2,3, und vorzugsweise höchstens 5,5, besonders bevorzugt höchstens 4,5.

Je genauer der Ziel-pH-Wert eingestellt wird, desto geringer fällt die Streuung der mittleren Partikelgröße zwischen unterschiedlichen Reaktionsansätzen aus. Vorzugsweise ist die Abweichung des pH Werts kleiner ±1, bevorzugt kleiner ±0,5, besonders bevorzugt kleiner ±0,3, insbesondere kleiner ±0,1.

Vorzugsweise wird zur Einstellung des pH-Werts des Hydrolysats eine Säure verwendet, welche auch im ersten Schritt eingesetzt werden kann, oder es wird eine Base verwendet, welche auch im zweiten Schritt eingesetzt werden kann.

Vorzugsweise wird im zweiten Schritt die Base ausgewählt aus Alkalihydroxid, Erdalkalihydroxid, Alkalimethanolat, Ammoniak und organischen Aminen. Bevorzugte organische Amine sind Alkylamine, wie Mono-, Di- oder Triethylamin, Mono-, Di- oder Trimethylamin oder 1,2-Ethylendiamin. Bevorzugt werden die Hydroxide von Li, Na, K eingesetzt. Bevorzugt wird eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Ammoniak oder Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/l.

Beim Einsatz einer Lösung von Alkalihydroxid in einem Alkanol mit 1 bis 3 Kohlenstoffatomen im zweiten Schritt haften die Partikel besonders wenig aneinander, zeigen einen besonders niedrigeren Agglomerationsgrad und neigen weniger zum Verklumpen. Die Partikel zeigen ein in kosmetischen Anwendungen bevorzugtes trockneres Hautgefühl.

KOH ist als Alkalihydroxid bevorzugt.

Alternativ zu NaOH und KOH ist auch der Einsatz eines NaOH-oder KOH-Bildners möglich, der in zweiten Schritt mit dem im Hydrolysat vorhandenen Wasser sofort zu NaOH oder KOH reagiert. Beispiele dafür sind Natriumethanolat, Kaliummethanolat, NaH und KH. Bei dieser Ausführungsform ist der Einsatz von Natriumethanolat oder Kaliummethanolat in methanolischer Lösung bevorzugt.

Die Temperatur bei der Zugabe der Lösung einer Base im zweiten Schritt wird in einer bevorzugten Ausführungsform vorzugsweise bei 0°C bis 60°C, bevorzugt bei 10°C bis 50°C, besonders bevorzugt 10°C bis 40°C, ganz besonders bevorzugt bei 10°C bis 30°C, insbesondere bei 15°C bis 25°C gehalten. Vorzugsweise ist die Differenz der Temperatur beim Nachrühren und der Temperatur der Zugabe der Lösung einer Base kleiner 20 °C, bevorzugt kleiner 10 °C, insbesondere kleiner 5 °C. Insbesondere wird der zweite Schritt bei der Temperatur durchgeführt, die das Hydrolysat nach dem ersten Schritt aufweist.

Vorzugsweise wird im zweiten Schritt so viel Lösung von Base zugegeben, dass ein pH Wert von mindestens 6, vorzugsweise mindestens 6,5 und höchstens 10, vorzugsweise höchstens 9,5 erreicht wird, jeweils direkt nach Zugabe der Base gemessen. Durch die Zugabe der Menge an Base kann die Partikelgröße beeinflusst werden, wobei niedrige pH Werte größere Partikel ergeben. Der insbesondere bevorzugte pH Wert beträgt 7,5 bis 9.

Die Lösung von Base wird im zweiten Schritt vorzugsweise innerhalb von 10 Sekunden bis 10 Minuten, insbesondere innerhalb von 1 bis 5 Minuten zugegeben, vorzugsweise unter starkem und kurzem Rühren.

Eine Trübung ist im dritten Schritt meist bereits nach 1 - 30 Minuten zu sehen.

Im dritten Schritt wird die Mischung nicht bewegt. Wenn in der Anfangsphase im dritten Schritt, in welchem die Ausbildung der Partikel erfolgt, bewegt wird, treten vermehrt verformte, verwachsene oder agglomerierte Partikel auf.

Bevorzugt wird die Mischung im dritten Schritt 45 min bis 6 h, besonders bevorzugt 1 h bis 5 h, insbesondere höchstens 4 h aufbewahrt.

Die Temperatur im dritten Schritt beträgt vorzugsweise 0°C bis 60°C, bevorzugt bei 10°C bis 50°C, besonders bevorzugt 10°C bis 40°C, ganz besonders bevorzugt 10°C bis 30°C, insbesondere 15°C bis 25°C. Bei niedrigen Temperaturen bilden sich größere Partikel, bei höheren Temperaturen bilden sich kleinere Partikel.

Bei einer Temperatur von 15°C bis 25°C besteht ein geringer oder keine Temperaturgradient der Reaktionsmischung zum Außenbereich, dadurch minimaler Wärmegradient zwischen Reaktorwandung und Reaktionslösung und dadurch minimierte thermische Konvektion während der Fällung der Partikel im dritten Schritt.

Im dritten Schritt wird die Temperatur der Mischung vorzugsweise mindestens 1 h, bevorzugt mindestens 1,5 h, besonders bevorzugt mindestens 2,5 h nicht mehr als 20 °C, bevorzugt nicht mehr als 10 °C verändert.

Im vierten Schritt wird vorzugsweise die gleiche Base eingesetzt wie im zweiten Schritt.

Die Temperatur bei der Zugabe der Lösung einer Base im vierten Schritt wird in einer bevorzugten Ausführungsform vorzugsweise bei 0°C bis 60°C, bevorzugt bei 10°C bis 50°C, besonders bevorzugt 10°C bis 40°C, ganz besonders bevorzugt bei 10°C bis 30°C, insbesondere bei 15°C bis 25°C gehalten. Vorzugsweise ist die Differenz der Temperatur im dritten Schritt und der Temperatur der Zugabe der Lösung einer Base im vierten Schritt kleiner 20 °C, bevorzugt kleiner 10 °C, insbesondere kleiner 5 °C. Insbesondere wird der vierte Schritt bei der Temperatur durchgeführt, die die Mischung nach dem dritten Schritt aufweist.

Die Lösung von Base wird im vierten Schritt vorzugsweise innerhalb von 10 Sekunden bis 10 Minuten, insbesondere innerhalb von 30 Sekunden bis 5 Minuten zugegeben, vorzugsweise unter starkem und kurzem Rühren.

Die Mischung wird in einer bevorzugten Ausführungsform nach dem fünften Schritt durch Zugabe einer Säure neutralisiert, vorzugsweise mit der gleichen Säure, die zum Ansäuern des Wassers im ersten Schritt eingesetzt wird.

Die Durchmischung im ersten, zweiten, vierten und fünften Schritt kann jeweils unabhängig voneinander durch einen statischen Mischer oder bevorzugt durch einen Rührer erfolgen.

Bevorzugt wird die Mischung im fünften Schritt 10 min bis 2 h, besonders bevorzugt 15 min bis 1,5 h, insbesondere 30 min bis 1 h aufbewahrt oder gerührt, bevorzugt gerührt, insbesondere bei niedriger Drehzahl.

Vorzugsweise weisen die Temperatur und der Temperaturgradient im fünften Schritt die gleichen Werte auf wie im dritten Schritt.

Im sechsten Schritt werden die Partikel isoliert, vorzugsweise durch Abfiltrieren oder Zentrifugieren.
Nach dem Isolieren werden die Partikel vorzugsweise mit vollentsalztem (VE) Wasser oder Alkohol gewaschen und vorzugsweise getrocknet.

Die Trocknung erfolgt vorzugsweise bei 40 bis 250 °C, besonders bevorzugt bei 100 bis 240 °C, insbesondere bevorzugt bei 140 bis 220 °C. Die Trocknung kann unter Umgebungsdruck oder bei vermindertem Druck erfolgen. Während der Trocknung findet auch eine Kondensation freier Si-OH Gruppen statt, die laut Kinetikmessungen vorzugsweise ab 150 °C, besser ab 180 °C, ideal ab 200 °C abläuft. Partikel welche lange Zeit bei 100 °C getrocknet werden, sind zwar Trocken, weisen aber einen hohen Si-OH Gehalt auf. Bei 150 °C ist der Si-OH Gehalt deutlich reduziert, aber noch nicht vollständig entfernt, bei 200 °C werden Si-OH Gruppen nochmals signifikant reduziert. Durch einen reduzierten Si-OH Gehalt ergeben sich Vorteile im Verteilungsverhalten und der Fluidisierung der Partikel. In speziellen Anwendungen, z.B. von wässrigen Dispersionen der Partikel, können Si-OH reiche und damit vergleichsweise hydrophile Partikel vorteilhaft sein. Diese können durch die Wahl einer möglichst niedrigen Trocknungstemperatur erzeugt werden.

Die Polysilsesquioxanpartikel werden vorzugsweise 0,5 bis 100 h, besonders bevorzugt 0,5 bis 24 h insbesondere 1 bis 14 h getrocknet.

Bevorzugt werden die Polysilsesquioxanpartikel beim Trocknen bewegt, z.B. mittels eines Wirbelschichttrockner oder Schaufeltrockners.

Eine Mahlung der Partikel ist nicht erforderlich. Solche Partikel zeigen ein sehr vorteilhaftes Verhalten, insbesondere für kosmetische Anwendungen. Sie weisen nur eine schwache Wechselwirkung miteinander und sind bereits bei geringer Scherung außerordentlich leicht und gleichmäßig zu verteilen und bewirken ein samtiges Hautgefühl. Dieses Verhalten ist bei stark agglomerierten oder miteinander verwachsenen Partikeln nicht zu beobachten. Diese ballen beim Verteilen auf der Haut zusammen, zeigen ein ungleichmäßiges Verteilungsbild auf der Haut und fühlen sich vergleichsweise kreidig, stumpf oder sogar kratzig an.

Die nach dem erfindungsgemäßen Verfahren hergestellten, getrockneten und ungemahlenen Polysilsesquioxanpartikel weisen vorzugsweise weniger als 35 Gew.-%, bevorzugt weniger als 30 Gew.-%, besonders bevorzugt weniger als 20 Gew.-%, einer Siebfraktion >200 µm auf.

Das erfindungsgemäße Verfahren kann als Batchansatz, als Semi-Batch und oder als kontinuierlicher Prozess geführt werden.

Eine besonders hohe Agglomerisationsfreiheit der Polysilsesquioxanpartikel kann durch eine anschließende Mahlung erreicht werden.

In einer besonderen Ausführungsform kann aus der nach dem fünften Schritt erhaltenen Mischung oder aus der durch Isolieren, Waschen und Redispergieren der aus dem fünften Schritt erhaltenen Mischung erhaltenen Dispersion ein trockenes, rieselfähiges Pulver im Sprühtrockner hergestellt werden. Je nach Alkoholgehalt der Mischung wird als Trockengas Luft oder Inertgas, z.B. Stickstoff, Argon, Helium, Magerluft mit maximal 2% Sauerstoff eingesetzt.
Die Sprühtrocknung kann in beliebigen zur Sprühtrocknung von Flüssigkeiten geeigneten und bereits vielfach bekannten Vorrichtungen durchgeführt werden.

In einer besonderen Ausführungsform werden die sprühgetrockneten Polysilsesquioxanpartikel nachgetrocknet, beispielsweise in einem Schaufeltrockner, Wirbelschichttrockner, Hordentrockner, Stromtrockner oder Trommeltrockner.

Die Polysilsesquioxanpartikel zeigen bei der Untersuchung im Elektronenmikroskop vorzugsweise eine kugelförmige Gestalt. Die sphärischen Polysilsesquioxanpartikel weisen vorzugsweise eine durchschnittliche Sphärizität y von mindestens 0,6, insbesondere mindestens 0,7 auf. Die sphärischen Polysilsesquioxanpartikel weisen vorzugsweise eine durchschnittliche Rundheit x von mindestens 0,6, insbesondere mindestens 0,7 auf. Die Rundheit x und Sphärizität y können nach DIN EN ISO 13503-2, Seite 37, Annex B.3, insbesondere Figur B.1 bestimmt werden.

Vorzugsweise werden alle Verfahrensschritte beim Druck der umgebenden Atmosphäre, also etwa 0,1 MPa (abs.) ausgeführt; sie können auch bei höheren oder niedrigeren Drücken durchgeführt werden. Bevorzugt sind Drücke von mindestens 0,08 MPa (abs.) und besonders bevorzugt mindestens 0,09 MPa (abs.), besonders bevorzugt höchstens 0,2 MPa (abs.), insbesondere höchstens 0,15 MPa (abs.).

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Siebanalyse:

Die Siebanalyse erfolgte mittels Trockensiebung an einer Analysensiebmaschine vom Typ Retsch AS 200 basic bei 100 % Amplitude. Für die Analyse wurden vier Siebe nach DIN ISO 3310 folgender Maschenweite gestapelt: 200 µm, 100 µm, 40 µm, 20 µm, Boden. Es wurden jeweils 100 g Substanz auf dem obersten Sieb (200 µm) aufgebracht und für 10 Minuten gesiebt. Anschließend werden die Rückstände in den einzelnen Sieben und Boden ausgewogen.

### Beispiele

Allgemeine Vorschrift: Herstellung von PolymethylsilsesquioxanPartikel
32 kg vollentsalztes (VE) Wasser mit Leitfähigkeit 0,1 µS/cm werden in einem emaillierten 50 Liter Rührkessel mit Mantelkühlung vorgelegt und auf 20 °C temperiert. Dabei wird mit 150 Upm gerührt. Der pH wird durch Zugabe von 0,1 molarer Salzsäure auf einen Wert von 4,40 eingestellt. 7,0 kg Methyltrimethoxysilan werden über 1 h zudosiert, dabei wird die Temperatur auf 20 °C gehalten. Nach Ende der Dosierung wird 30 Minuten bei 20 °C gerührt.
Der pH Wert wird optional korrigiert.

Nach Ende der Korrektur wird weitere 30 Minuten bei 20 °C gerührt. Es erfolgt die erste Basenzugabe innerhalb 1 min bei 20 °C. Es wird 3 min homogen vermischt. Dann wird der Rührer abgestellt und man lässt die Lösung zur Fällung ruhen (Ruhezeit Schritt 3 siehe Tabelle 1). Anschließend wird der Rührer für 3 min auf schwacher Stufe angestellt, um etwaiges Sediment aufzurühren. Es erfolgt die optionale zweite Basenzugabe innerhalb von 1 min bei 20 °C. Anschließend wird 30 min auf schwacher Stufe gerührt. Nach Beendigung der Fällung werden die Partikel abfiltriert, mit VE Wasser gewaschen und bei 150 °C für 8 h getrocknet.

Die folgende Tabelle 1 fasst die vorliegenden Daten zusammen. Es ist zu erkennen, dass nur mit dem erfindungsgemäßen Verfahren bei kurzer Fällzeit (zweiter bis fünfter Schritt) weiche Partikel mit wenig Grobanteil (>200 µm) zu erhalten sind. "Weich" bedeutet, dass das Produkt als Pulver vorliegt oder evtl. vorhandene Körner ohne nennenswerten Kraftaufwand zu einem Pulver zerdrückt werden können.

In den nicht erfindungsgemäßen Vergleichsbeispielen V5, V10 und V11 werden weiche Partikel nur nach unakzeptabel langer Fällzeit erhalten.

**Tabelle 1**

| **Beispiel** | **Verwendete Base** | **Ruhezeit (Schritt 3)** | **Zweite Zugabe (Schritt 4)** | **Beschaffenheit nach statischem Trocknen** | **Gefühl** | **Siebfraktion >200 µm (%)** |
|---|---|---|---|---|---|---|
| V1 | KOH | 1 h | nein | körnig | hart | |
| V2 | KOH | 1,5 h | nein | körnig | hart | |
| V3 | KOH | 2,5 h | nein | feinkörnig | hart | 36 |
| V4 | KOH | 4,5 h | nein | körnig | mittelhart | 45 |
| V5 | KOH | 22,5 h | nein | pulvrig | weich | 5 |
| 1 | KOH | 1,5 h | ja | feinkörnig | weich | |
| 2 | KOH | 2,5 h | ja | pulvrig | weich | 14 |
| 3 | KOH | 4,5 h | ja | pulvrig | weich | 10 |
| V5 | KOH | 22,5 h | ja | pulvrig | weich | 5 |
| V6 | NH3 | 1 h | nein | körnig | hart | 97 |
| V7 | NH3 | 1,5 h | nein | körnig | hart | 64 |
| V8 | NH3 | 2,5 h | nein | körnig | mittelhart | |
| V9 | NH3 | 4,5 h | nein | körnig | mittelhart | |
| V10 | NH3 | 22,5 h | nein | pulvrig | weich | 9 |
| 4 | NH3 | 1 h | ja | pulvrig | weich | 13 |
| 5 | NH3 | 1,5 h | ja | pulvrig | weich | 11 |
| 6 | NH3 | 2,5 h | ja | pulvrig | weich | |
| 7 | NH3 | 4,5 h | ja | pulvrig | weich | |
| V11 | NH3 | 22,5 h | ja | pulvrig | weich | 8 |

## Patentansprüche

1. Verfahren zur Herstellung sphärischer Polysilsesquioxanpartikel, bei dem in einem ersten Schritt Trialkoxysilan der allgemeinen Formel (I)
RSi(OR¹)₃ (I),
in der
R einen Kohlenwasserstoffrest mit 1 bis 16 Kohlenstoffatomen dessen Kohlenstoffkette durch nicht benachbarte Gruppen -O-unterbrochen sein kann,
**R¹** einen C₁- bis C₄-Alkylrest bedeuten, mit angesäuertem Wasser mit einem pH-Wert von höchstens 6 unter Durchmischung zu einem Hydrolysat umgesetzt wird, in einem zweiten Schritt das Hydrolysat mit Lösung einer Base in Wasser oder C₁- bis C₄-Alkanol vermischt wird, in einem dritten Schritt die Mischung 30 Minuten bis 6 Stunden aufbewahrt wird,
in einem vierten Schritt die Mischung mit weiterer Lösung einer Base in Wasser oder C₁- bis C₄-Alkanol vermischt wird,
in einem fünften Schritt die Mischung mindestens 5 Minuten aufbewahrt oder bewegt wird und in einem sechsten Schritt die Polysilsesquioxanpartikel isoliert werden.

2. Verfahren nach Anspruch 1, bei dem **R** Ethylrest oder Methylrest bedeutet.

3. Verfahren nach einem oder mehreren der voranstehenden Ansprüche, bei dem **R¹** einen Ethylrest oder Methylrest bedeutet.

4. Verfahren nach einem oder mehreren der voranstehenden Ansprüche, bei dem im ersten Schritt die Umsetzung zum Hydrolysat bei einem pH-Wert von 4,5 bis 2 erfolgt.

5. Verfahren nach einem oder mehreren der voranstehenden Ansprüche, bei dem im zweiten Schritt eine Lösung von Alkalihydroxid in Wasser oder in einem Alkanol mit 1 bis 3 Kohlenstoffatomen eingesetzt wird.

6. Verfahren nach einem oder mehreren der voranstehenden Ansprüche, bei dem im zweiten Schritt so viel Lösung von Base zugegeben wird, dass ein pH Wert von 6,5 bis 9,5 erreicht wird, jeweils direkt nach Zugabe von Base gemessen.

7. Verfahren nach einem oder mehreren der voranstehenden Ansprüche, bei dem im dritten Schritt die Temperatur der Mischung mindestens 1 h um nicht mehr als 10 °C verändert wird.

8. Verfahren nach einem oder mehreren der voranstehenden Ansprüche, bei dem im vierten Schritt die gleiche Base eingesetzt wird wie im zweiten Schritt.

9. Verfahren nach einem oder mehreren der voranstehenden Ansprüche, bei dem nach dem vierten Schritt die Mischung durch Zugabe einer Säure neutralisiert wird.

10. Verfahren nach einem oder mehreren der voranstehenden Ansprüche, bei dem die Mischung im fünften Schritt gerührt wird.

11. Verfahren nach einem oder mehreren der voranstehenden Ansprüche, bei dem die Partikel im sechsten Schritt durch Abfiltrieren oder Zentrifugieren isoliert werden.

## Claims

1. Process for producing spherical polysilsesquioxane particles in which in a first step trialkoxysilane of general formula (I)
RSi(OR¹)₃ (I),
in which
**R** represents a hydrocarbon radical having 1 to 16 carbon atoms whose carbon chain may be interrupted by nonadjacent -O- groups,
**R¹** represents a C₁- to C₄-alkyl radical, is reacted with acidified water having a pH of not more than 6 with commixing to afford a hydrolyzate, in a second step the hydrolyzate is mixed with a solution of a base in water or C₁- to C₄-alkanol, in a third step the mixture is stored for 30 minutes to 6 hours,
in a fourth step the mixture is mixed with a further solution of a base in water or C₁- to C₄-alkanol, in a fifth step the mixture is stored or agitated for at least 5 minutes and in a sixth step the polysilsesquioxane particles are isolated.

2. Process according to Claim 1, in which R represents ethyl radical or methyl radical.

3. Process according to one or more of the preceding claims, in which **R¹** represents an ethyl radical or methyl radical.

4. Process according to one or more of the preceding claims, in which in the first step the reaction to afford the hydrolyzate is effected at a pH of 4.5 to 2.

5. Process according to one or more of the preceding claims, in which in the second step a solution of alkali metal hydroxide in water or in an alkanol having 1 to 3 carbon atoms is employed.

6. Process according to one or more of the preceding claims, in which in the second step sufficient solution of base is added to ensure that a pH of 6.5 to 9.5 is achieved in each case measured immediately after addition of base.

7. Process according to one or more of the preceding claims, in which in the third step the temperature of the mixture is altered by not more than 10°C for at least 1 h.

8. Process according to one or more of the preceding claims, in which in the fourth step the same base as in the second step is employed.

9. Process according to one or more of the preceding claims, in which after the fourth step the mixture is neutralized by addition of an acid.

10. Process according to one or more of the preceding claims, in which the mixture is stirred in the fifth step.

11. Process according to one or more of the preceding claims, in which the particles are isolated by filtration or centrifugation in the sixth step.

## Revendications

1. Procédé de fabrication de particules de polysilsesquioxane sphériques, selon lequel, dans une première étape, du trialcoxysilane de la formule générale (I) :
RSi(OR¹)₃ (I),
dans laquelle
**R** signifie un radical hydrocarboné de 1 à 16 atomes de carbone, dont la chaîne carbonée peut être interrompue par des groupes -O- non voisins,
les **R¹** signifient un radical alkyle en C₁ à C₄, est mis en réaction avec de l'eau acidifiée ayant un pH d'au plus 6 avec mélange en un hydrolysat,
dans une deuxième étape, l'hydrolysat est mélangé avec une solution d'une base dans de l'eau ou un alcanol en C₁ à C₄,
dans une troisième étape, le mélange est conservé pendant 30 minutes à 6 heures,
dans une quatrième étape, le mélange est mélangé avec une solution supplémentaire d'une base dans de l'eau ou un alcanol en C₁ à C₄,
dans une cinquième étape, le mélange est conservé ou agité pendant au moins 5 minutes,
et dans une sixième étape, les particules de polysilsesquioxane sont isolées.

2. Procédé selon la revendication 1, selon lequel R signifie un radical éthyle ou un radical méthyle.

3. Procédé selon une ou plusieurs des revendications précédentes, selon lequel **R¹** signifie un radical éthyle ou un radical méthyle.

4. Procédé selon une ou plusieurs des revendications précédentes, selon lequel, dans la première étape, la mise en réaction en l'hydrolysat a lieu à un pH de 4,5 à 2.

5. Procédé selon une ou plusieurs des revendications précédentes, selon lequel, dans la deuxième étape, une solution d'hydroxyde alcalin dans de l'eau ou dans un alcanol de 1 à 3 atomes de carbone est utilisée.

6. Procédé selon une ou plusieurs des revendications précédentes, selon lequel, dans la deuxième étape, suffisamment de solution de base est ajoutée pour atteindre un pH de 6,5 à 9,5, à chaque fois mesuré directement après l'ajout de base.

7. Procédé selon une ou plusieurs des revendications précédentes, selon lequel, dans la troisième étape, la température du mélange n'est pas modifiée de plus de 10 °C pendant au moins 1 h.

8. Procédé selon une ou plusieurs des revendications précédentes, selon lequel, dans la quatrième étape, la même base que dans la deuxième étape est utilisée.

9. Procédé selon une ou plusieurs des revendications précédentes, selon lequel, après la quatrième étape, le mélange est neutralisé par ajout d'un acide.

10. Procédé selon une ou plusieurs des revendications précédentes, selon lequel le mélange est agité dans la cinquième étape.

11. Procédé selon une ou plusieurs des revendications précédentes, selon lequel les particules sont isolées par filtration ou centrifugation dans la sixième étape.
